# EUROPÄISCHE PATENTANMELDUNG

(11) **EP 1 256 488 A1**
(43) Veröffentlichungstag der Anmeldung: **13.11.2002**
(21) Anmeldenummer: 02009319.1
(22) Anmeldetag: 02.05.2002
(51) Int. Cl.: B60R 5/04, B60N 2/36

(54) **Laderaumboden**

(30) Priorität: 08.05.2001 DE 20107762 U
(71) Anmelder: Johnson Controls GmbH, 51399 Burscheid (DE)
(72) Erfinder: Suess, Thorsten, 56235 Ransbach-Baumbach (DE)
(74) Vertreter: Patentanwälte Dr. Solf & Zapf

(57) **Zusammenfassung**

Laderaumboden für ein Kraftfahrzeug bestehend aus einem flächigen Bodenelement (19) zur Anordnung hinter einem ein Sitzteil (2) und eine zur Vergrößerung einer Ladefläche (27) in Richtung Sitzteil (2) um eine Schwenkachse (X-X) umlegbare Rückenlehne (3) aufweisenden Fahrzeugsitz (6), wobei das Bodenelement (19) als Zusatzteil auf einem Fahrzeugboden (11) derart angeordnet ist, dass dieses zumindest mit seinem zur Rückenlehne (4) weisenden Randbereich (31) etwa auf das Niveau einer Rückfläche (7) der in Richtung Sitzteil (3) umgelegten Rückenlehne (4) anhebbar und in der angehobenen Stellung arretierbar ist.

## Beschreibung

Die Erfindung betrifft einen Laderaumboden für ein Kraftfahrzeug bestehend aus einem flächigen Bodenelement zur Anordnung hinter einem ein Sitzteil und eine zur Vergrößerung einer Ladefläche in Richtung Sitzteil um eine Schwenkachse umlegbare Rückenlehne aufweisenden Fahrzeugsitz.

Bei Kraftfahrzeugen ist die flexible Ausgestaltung der Ladefläche durch eine zusätzliche Vergrößerung mittels der Rückenlehnenlänge gewünscht.

Nachteilig ist, dass zwischen dem Fahrzeugsitz und dem Fahrzeugboden eine Stufe im umgeklappten Zustand der Rückenlehne angeordnet ist. Über diese Stufe sind schwere Gegenstände die in dem Kraftfahrzeug transportiert werden nur mit vergrößertem Aufwand zu heben. Längliche Gegenstände, die sich aufgrund ihres Gewichtes nicht anheben lassen, stoßen an dieser Stufe an, so dass die Gegenstände aus dem Kraftfahrzeug verkehrswidrig und sicherheitsgefährdend herausragen, oder gar nicht mit dem Kraftfahrzeug transportiert werden können. Die durch die umgeklappte Rückenlehne zusätzlich gebildete Ladefläche kann in einem solchen Fall nicht ausgenutzt werden.

Der vorliegenden Erfindung liegt die Aufgabe zugrunde, mit einfachen Mitteln eine verbesserte Nutzung der Ladefläche, die durch die umgeklappte Rückenlehne vergrößert wird, zu ermöglichen.

Erfindungsgemäß wird dies dadurch erreicht, dass das Bodenelement als Zusatzteil auf einem Fahrzeugboden derart angeordnet ist, dass dieses zumindest mit seinem zur Rückenlehne weisenden Randbereich etwa auf das Niveau einer Rückfläche der in Richtung Sitzteil umgelegten Rückenlehne anhebbar und in der angehobenen Stellung arretierbar ist.

Dadurch, dass der Laderaumboden mit einem Ende auf das Niveau der geschwenkten Rückfläche angehoben ist, wird eine Ladefläche zur Verfügung gestellt, die bei Vergrößerung durch die Länge der Rückenlehne voll ausgenutzt werden kann. Sperrige und insbesondere schwere Gegenstände sind äußerst leicht auf der Ladefläche verschiebbar. Ein notwendiges Anheben des Gegenstandes über die Stufe ist somit nicht mehr erforderlich, da diese vorteilhaft überbrückt wird.

Äußerst vorteilhaft wird der Laderaumboden ohne manuelles Anheben selbsttätig beim Umklappen der Rückenlehne in diese Position verbracht. Dies wird dadurch erreicht, dass ein an der Rückenlehne angeordnetes Anbindungselement den Laderaumboden bei dem Umschwenken der Rückenlehne zum Sitzteil untergreift und anhebt. Das Anbindungselement greift vorzugsweise mit einem hakenähnlich ausgestalteten Abschnitt in eine Ausnehmung des Laderaumbodens. Hierdurch wird ein zum Sitzteil weisendes Ende des Laderaumbodens lediglich durch das Umschwenken der Rückenlehne angehoben und in Richtung Sitzteil mitgenommen. Ein aufwendiges Anheben des Laderaumbodens zur Überbrückung der Stufe oder dem Verschließen eines Spaltes ist nicht notwendig und läßt sich durch eine vorteilhafte Einhandbedienung zum Umklappen der Rückenlehne durchführen.

Erfindungsgemäß ist der Laderaumboden derart auf dem Fahrzeugboden verschieblich, dass vorteilhaft ein zwischen dem Fahrzeugsitz und dem Fahrzeugboden angeordneter Spalt verschlossen wird.

Weitere vorteilhafte Ausgestaltungen sind in den Unteransprüchen und in der Beschreibung offenbart.

Anhand eines in den Zeichnungen dargestellten Ausführungsbeispiels wird die Erfindung näher erläutert.

Es zeigen :
- Fig. 1: eine perspektivische Ansicht eines hinter einem Fahrzeugsitz angeordneten Laderaumbodens,
- Fig. 2: ein erfindungsgemäßes Anbindungselement,
- Fig. 3: eine Seitenansicht mit zwei möglichen Gebrauchspositionen,
- Fig. 4: eine perspektivische Ansicht mit flexibler Anwendung der beiden Gebrauchspositionen,
- Fig. 5: eine Vergrößerung aus Figur 4.

In den verschiedenen Figuren sind die gleichen Teile stets mit denselben Bezugszeichen versehen, so dass sie in der Regel jeweils nur einmal beschrieben werden. In den Figuren ist ein hinter einem Rücksitz eines Kraftfahrzeuges angeordneter Laderaumboden gezeigt.

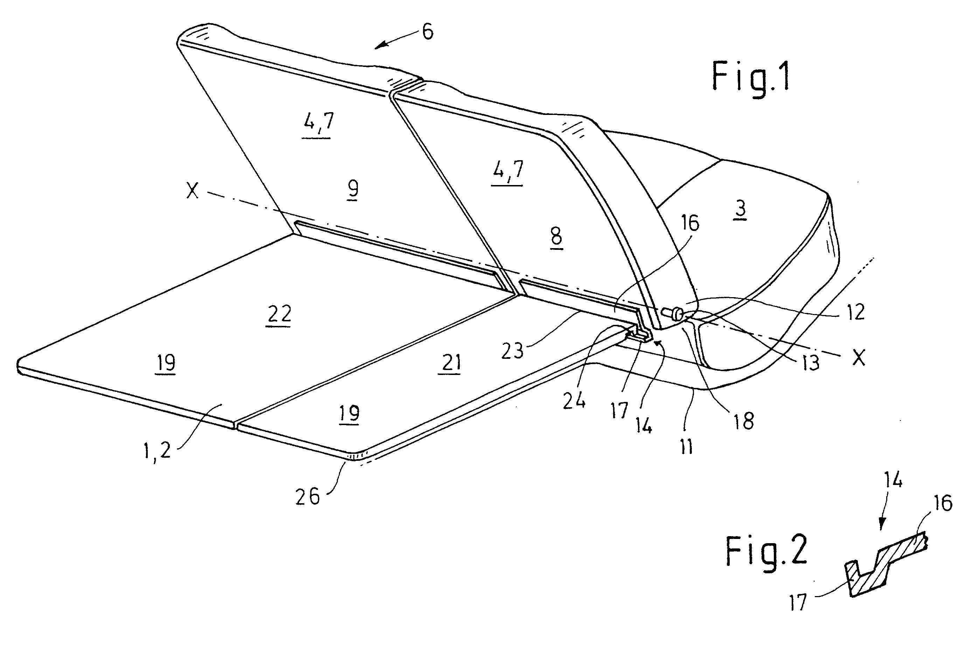

Figur 1 zeigt einen Laderaumboden 1 in einer ersten Gebrauchsposition 2, der hinter einem ein Sitzteil 3 und eine Rückenlehne 4 aufweisenden Fahrzeugsitz 6 angeordnet ist, wobei im Anschluß an eine Rückfläche 7 der Rückenlehne 4 der Laderaumboden 1 angeordnet ist.

In dem dargestellten Ausführungsbeispiel ist die Rückenlehne 4 in zwei asymmetrische Segmente 8,9 aufgeteilt. Ein erstes Segment 8 ist schmaler ausgebildet als ein zweites Segment 9. An einem zu einem Fahrzeugboden 11 weisenden Bereich 12 der Rückenlehne 4 ist ein Drehmittel 13 mit einer Drehachse X-X angeordnet, um welche die Rückenlehne 4 in Richtung des Sitzteils 3 schwenkbar ist. Die Segmente 8,9 sind autark voneinander um die Schwenkachse X-X schwenkbar.

In dem Bereich 12 der Rückenlehne 4 ist an ihrer Rückfläche 7 ein Anbindungselement 14 angeordnet. Das Anbindungselement 14 ist leistenartig ausgestaltet und weist zwei ineinander übergehende Abschnitte 16,17 auf, dessen zweiter Abschnitt 17 hakenähnlich ausgeformt ist. Mit seinem ersten Abschnitt 16 ist das Anbindungselement 14 an der Rückfläche 7 befestigt, wobei sein zweiter Abschnitt 17 über ein zum Fahrzeugboden 11 weisenden Ende 18 des Bereiches 12 der Rückenlehne 4 hinausragt.

In Figur 2 ist das Anbindungselement 14 als Haken 14 beispielhaft dargestellt. Das Anbindungselement 14 kann in jeder denkbaren Ausführungsform ausgestaltet sein.

Der Laderaumboden 1 weist ein flächiges Bodenelement 19 auf, das in zwei entsprechend der asymmetrischen Teilung der Rückenlehne 3 ausgestalteten Teilelemente 21,22 aufgeteilt ist (vgl. Fig.1). An diesen ist jeweils an einem zu der Rückfläche 7 der Rückenlehne 4 weisenden Ende 23 eine Ausnehmung 24 angeordnet, die als Nut 24 ausgestaltet ist. Diese sind an der zu dem Fahrzeugboden 11 weisenden Seite 26 durch beide Teilelemente 21,22 des Bodenelementes 19 parallel zum Ende 23 eingebracht (vgl. Fig. 1). Beide Teilelemente 21,22 bilden eine Ladefläche 27 aus.

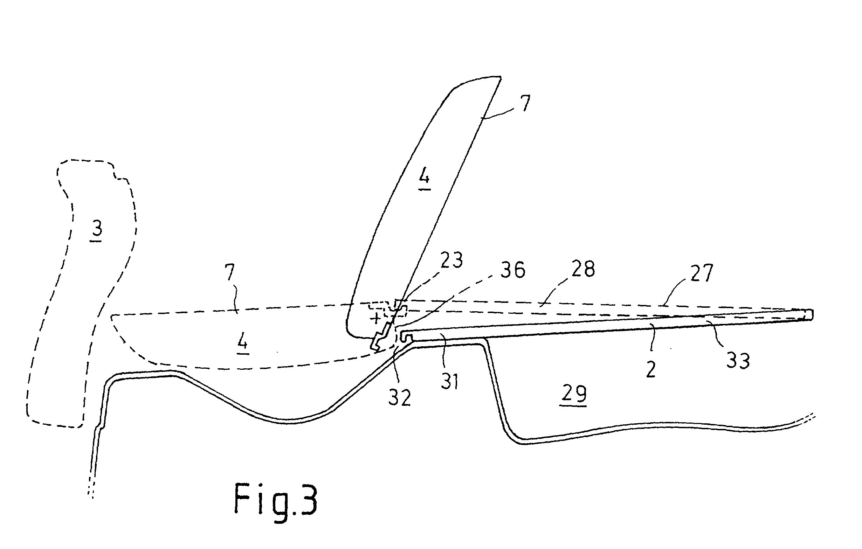

In Figur 3 sind zwei Gebrauchspositionen 2,28 des Laderaumbodens 1 gezeigt. Die erste Gebrauchsposition 2 ist durchgezogen dargestellt, eine zweite Gebrauchsposition 28 ist gestrichelt abgebildet.

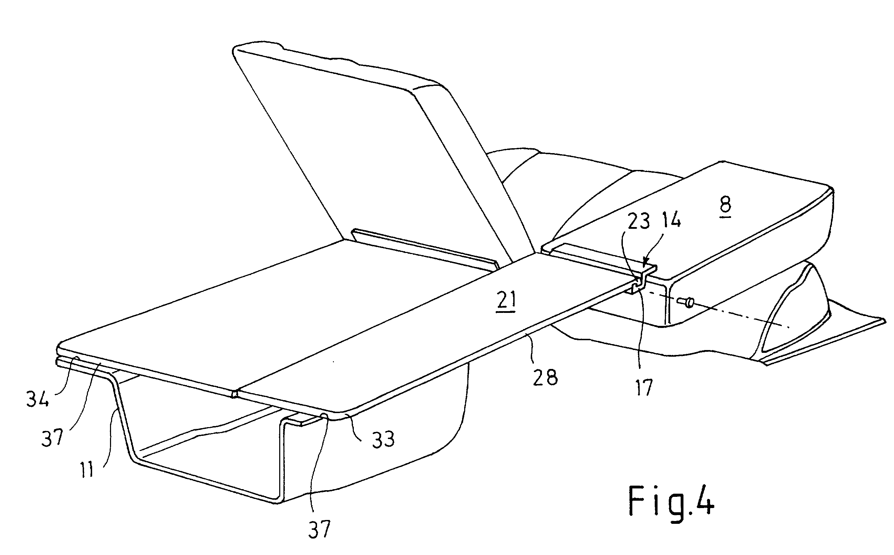

In der ersten Gebrauchsposition 2 befindet sich der Fahrzeugsitz 6 in einer Passagier Transportposition. Der Laderaumboden 1 verdeckt eine Vertiefung 29 des Fahrzeugbodens 11. Mit einem Randbereich 31 liegt der Laderaumboden 1 derart auf dem Fahrzeugboden 11 auf, dass der Laderaumboden 1 mit seinem Ende 23 über den Fahrzeugboden 11 hinaus zur Rückenlehne 4 weisend ragt. Zwischen dem Fahrzeugsitz 6 und dem Fahrzeugboden 11 ist ein Spalt 32 angeordnet, so dass die Nut 24 für das Anbindungselement 14 zugänglich ist, und dem Anbindungselement 14 eine entsprechende Schwenkbewegung, ohne an den Fahrzeugboden 11 anzustoßen, ermöglicht. Anstelle der Nut 24 kann an dem Ende 23 des Laderaumbodens 1 eine Winkelleiste angeordnet sein, in die das Anbindungselement 14 eingreifen könnte. An ihren seitlichen Randbereichen 33,34 liegen die Teilelemente 21,22 des Laderaumbodens 1 im wesentlichen plan auf dem Fahrzeugboden 11 auf ( vgl. Fig. 4).

In der zweiten Gebrauchsposition 28 ist die Rückenlehne 4 in Richtung Sitzteil 3 geschwenkt, wodurch die Ladefläche 27 durch die Rückfläche 7 vergrößert wird. Der Laderaumboden 1 geht mit seinem Randbereich 31 im wesentlichen stufenlos in die Rückfläche 7 über. Das Sitzteil 3 ist in diesem Ausführungsbeispiel in Richtung einer Fahrzeugfront geschwenkt, dieses kann aber auch in seiner Position verbleiben, wobei die Rückenlehne 4 auf diesem abgelegt wird (vgl. Fig. 4). In der zum Sitzteil 3 geschwenkten Position der Rückenlehne 4 wird eine Stufe 36 ausgebildet, die zwischen dem Fahrzeugsitz 6 und dem Laderaumboden 1 angeordnet ist. Bei dem Umklappen der Rückenlehne 4 greift das Anbindungselement 14 derart in die Nut 24 ein, dass der Laderaumboden 1 während des Schwenkvorgangs mit seinem Randbereich 31 angehoben wird und in Richtung Sitzteil 3 mitgenommen wird. Hierdurch wird die Stufe 36 erfindungsgemäß überbrückt, wodurch eine in Richtung Sitzteil 3 gering rampenartig ansteigende Ladefläche 27 gebildet wird. Somit können schwer zu hebende und sperrige Transportgüter leicht derart auf der Ladefläche 27 verschoben werden, dass die Ladefläche 27 mit der zusätzlichen Rückfläche 7 ausgenutzt werden kann.

In Figur 4 ist eine mögliche Anwendung des erfindungsgemäßen Laderaumbodens 1 gezeigt, in der lediglich das erste Segment 8 der Rückenlehne 4 umgeklappt ist. Mit seinem Ende 23 ist das Teilelement 21 des Laderaumbodens 1 in dem zweiten Abschnitt 17 des Anbindungselementes 14 gelagert und arretiert. Mit seinem zu dem Ende 23 gegenüberliegenden Ende 37 des mitgenommenen Teilelementes 21 des Laderaumbodens 1 ist dieses auf dem Fahrzeugboden 11 stabil gelagert. Damit der Laderaumboden 1 bei relativ schwerer Beladung trotz der geringen Steigung nicht in Richtung Fahrzeugboden 11 ausgebaucht wird, ist der Laderaumboden 1 verstärkt.

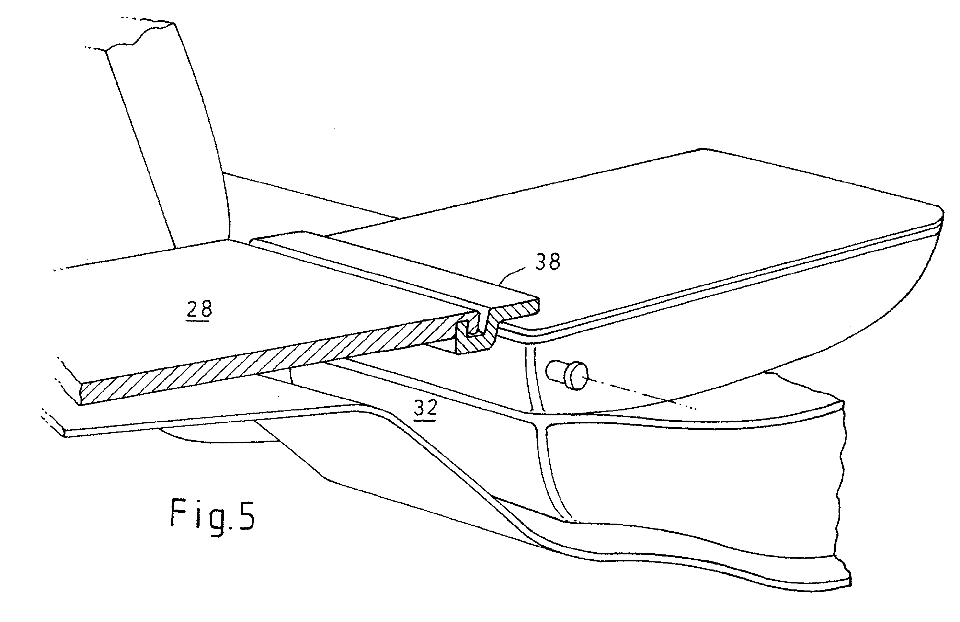

Erfindungsgemäß greift das Anbindungselement 14 in die Nut 24 des Laderaumbodens 1 ein. Hierzu ist die Nut 24 dem zweiten Abschnitt 17 des Anbindungselementes 14 angepaßt, so dass der Laderaumboden 1 an das Anbindungselement 14 angebunden wird (vgl. Fig. 5). Ein Ende 38 des ersten Abschnittes 16 des Anbindungselementes 14 ist in Figur 5 unbearbeitet dargestellt.

Dieses Ende 38 kann aber derart bearbeitet werden, dass es einen zur Rückfläche 7 der Rückenlehne 4 abgeflachten Übergang aufweist.

Durch eine erfindungsgemäße Beweglichkeit des Laderaumbodens 1 auf dem Fahrzeugboden wird erreicht, dass der Laderaumboden 1 in der zweiten Gebrauchsposition 28 vorteilhaft den Spalt 32 verschließt (vgl. Fig.5).

Erfindungsgemäß sind an dem Laderaumboden 1 Befestigungsvorrichtungen anbringbar, die ein Sichern von Ladungen ermöglichen. Weiter kann der Laderaumboden 1 derart ausgestaltet sein, dass dieser aus dem Laderaum entnehmbar ist.

Die Erfindung ist nicht auf das dargestellte Ausführungsbeispiel beschränkt, sondern umfaßt auch alle im Sinne der Erfindung gleichwirkenden Ausführungen. Denkbar wäre zum Beispiel, dass die Rückenlehne nicht geteilt oder symmetrisch geteilt ausgeführt ist, und in diesen Ausführungsformen schwenkbar ist. Vorstellbar ist, dass das Anbindungselement 14 kürzer ausgebildet ist, wobei die Nut 24 dieser Länge angepaßt oder länger ausgestaltet wäre.

Ferner ist die Erfindung nicht auf die im Anspruch 1 definierte Merkmalskombination beschränkt, sondern kann auch durch jede beliebige Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist Anspruch 1 lediglich als ein erster Formulierungsversuch für eine Erfindung zu verstehen.

### Bezugszeichenliste :

- 1.: Laderaumboden
- 2.: erste Gebrauchsposition
- 3.: Sitzteil
- 4. 5.: Rückenlehne
- 6.: Fahrzeugsitz
- 7.: Rückfläche
- 8.: erstes Segment
- 9. 10.: zweites Segment
- 11.: Fahrzeugboden
- 12.: Bereich
- 13.: Drehmittel
- 14. 15.: Anbindungselement
- 16.: erster Abschnitt
- 17.: zweiter Abschnitt
- 18.: Ende
- 19. 20.: Bodenelement
- 21.: Teilelement
- 22.: Teilelement
- 23.: Ende
- 24. 25.: Ausnehmung, Nut
- 26.: Seite
- 27.: Ladefläche
- 28.: zweite Gebrauchsposition
- 29. 30.: Vertiefung
- 31.: Randbereich
- 32.: Spalt
- 33.: seitlicher Randbereich
- 34. 35.: seitlicher Randbereich
- 36.: Stufe
- 37.: Ende
- 38.: Ende

## Patentansprüche

1. Laderaumboden für ein Kraftfahrzeug bestehend aus einem flächigen Bodenelement (19) zur Anordnung hinter einem ein Sitzteil (2) und eine zur Vergrößerung einer Ladefläche (27) in Richtung Sitzteil (2) um eine Schwenkachse (X-X) umlegbare Rückenlehne (3) aufweisenden Fahrzeugsitz (6),
**dadurch gekennzeichnet, dass**
das Bodenelement (19) als Zusatzteil auf einem Fahrzeugboden (11) derart angeordnet ist, dass dieses zumindest mit seinem zur Rückenlehne (4) weisenden Randbereich (31) etwa auf das Niveau einer Rückfläche (7) der in Richtung Sitzteil (3) umgelegten Rückenlehne (4) anhebbar und in der angehobenen Stellung arretierbar ist.

2. Laderaumboden nach Anspruch 1,
**dadurch gekennzeichnet, dass**
an der Rückenlehne (4) ein Anbindungselement (14) derart angeordnet ist, dass das Anbindungselement (14) bei dem Umlegen der Rückenlehne (4) selbsttätig den benachbarten Randbereich (31) des Bodenelementes (19) untergreift und auf das Rückflächen-Niveau anhebt.

3. Laderaumboden nach Anspruch 1 oder 2,
**dadurch gekennzeichnet, dass**
das Anbindungselement (14) leistenartig mit zwei ineinander übergehenden Abschnitten (16,17) ausgestaltet ist, dessen erster Abschnitt (16) an der Rückfläche (7) der Rückenlehne (4) angeordnet ist und sein zweiter Abschnitt (17) hakenähnlich ausgebildet ist.

4. Laderaumboden nach einem der Absprüche 1 bis 3,
**dadurch gekennzeichnet, dass**
das Anbindungselement (14) derart an der Rückenlehne (4) angeordnet ist, dass dieses bei dem Schwenken der Rückenlehne (4) mit seinem zweiten Abschnitt (17) in eine Ausnehmung (24) des Bodenelementes (19) eingreift.

5. Laderaumboden nach einem der Ansprüche 1 bis 4,
**dadurch gekennzeichnet, dass**
das Bodenelement (11) auf dem Fahrzeugboden (9) verschieblich ist.

6. Laderaumboden nach einem der Ansprüche 1 bis 5,
**dadurch gekennzeichnet, dass**
das Bodenelement (11) mit seinem Randbereich (31) im umgelegten Zustand der Rückenlehne (4) im wesentlichen stufenlos in deren Rückfläche (7) übergeht.

7. Laderaumboden nach einem der Ansprüche 1 bis 6,
**dadurch gekennzeichnet, dass**
das Bodenelement (19) an seinem Randbereich (31) die Ausnehmung (24) aufweist.

8. Laderaumboden nach einem der Ansprüche 1 bis 7,
**dadurch gekennzeichnet, dass**
das Bodenelement (19) entsprechend einer Teilung der Rückenlehne (3) in Teilelemente (21,22) aufgeteilt ist.

9. Laderaumboden nach einem der Ansprüche 1 bis 8,
**dadurch gekennzeichnet, dass**
das Bodenelement (19) verstärkt ist.

10. Laderaumboden nach einem der Ansprüche 1 bis 9,
**dadurch gekennzeichnet, dass**
an dem Bodenelement (11) Befestigungsmittel zur Ladungssicherung montierbar sind.

11. Laderaumboden nach einem der Ansprüche 1 bis 10,
**dadurch gekennzeichnet, dass**
des Anbindungselement (14) mit einer an das Ende (23) des Bodenelementes (19) montierbaren Winkelleiste verbindbar ist.
